# EUROPEAN PATENT SPECIFICATION

(11) **EP 1 376 080 B1**
(45) Date of publication and mention of the grant of the patent: **01.12.2004**
(21) Application number: 02013601.6
(22) Date of filing: 19.06.2002
(51) Int. Cl.: G01J 3/26, G01B 9/02, G01B 11/26

(54) **Stabilized Fabry-Perot interferometer and method for stabilizing a Fabry-Perot interferometer**
Stabilisiertes Fabry-Perot Interferometer und Verfahren zum Stabilisieren eines Fabry-Perot Interferometers
Interféromètre Fabry-Pérot stabilisé et procédé de stabilisation d'un interféromètre Fabry-Perot

(43) Date of publication of application: 02.01.2004
(73) Proprietor: Sandercock, John R., 8909 Zwillikon (CH)
(72) Inventor: Sandercock, John R., 8909 Zwillikon (CH)
(74) Representative: Schwarz, Thomas, Dipl.-Ing.

(56) References cited:
- US-A- 4 444 501
- US-A- 4 850 709
- PATENT ABSTRACTS OF JAPAN vol. 015, no. 180 (P-1199), 9 May 1991 (1991-05-09) & JP 03 039712 A (NEC CORP), 20 February 1991 (1991-02-20)

## Description

The invention relates to a Fabry-Perot interferometer according to the preamble of claim 1 and to a method for stabilising the interferometer according to the preamble of claim 15.

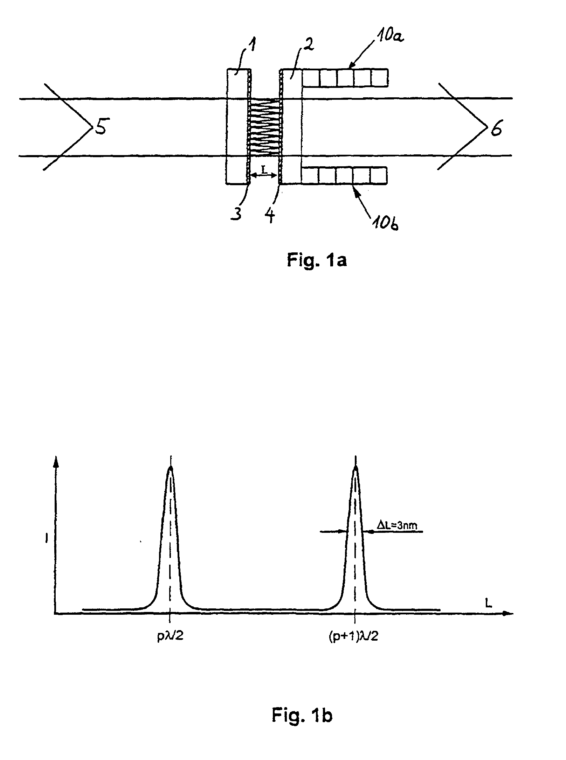

The Fabry-Perot is a very high resolution spectrometer commonly used for analysing visible light. As shown in figure 1a it consists of two very flat mirrors arranged accurately parallel to one another with a suitable scanning device (such as a piezoelectric translator) which enables the spacing between the mirrors to be varied (Figure 1a).

The device acts as a tuneable resonator. Light incident perpendicularly on the first mirror will be transmitted by the interferometer whenever the wavelength λ satisfies the condition$\text{2nL} \text{=} \text{pλ}$ where L is the spacing between the mirrors, n is the refractive index of the medium between the mirrors and p is an integer. In many applications the spacing L is varied by piezoelectric means.

The transmission curve for the interferometer is given by 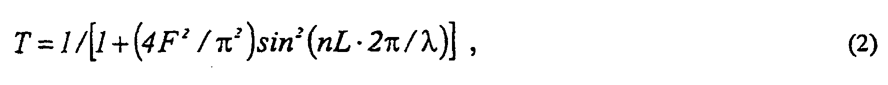 and shown in Figure 1b as a function of mirror spacing L.

Because the light makes many reflections between the mirrors the resonant peaks are sharp. The ratio of peak spacing to peak width is known as the finesse F. The finesse depends on mirror flatness and reflectivity and in typical applications values of finesse of around 30 - 100 are used.

Although the Fabry-perot is a very useful instrument in view of its very high resolution, it is a highly sensitive device which is difficult to keep stable. Referring to figure 1b it is seen that a change in mirror spacing of only 3nm is needed to scan through the transmission peak. For stable operation therefore both mirror spacing and parallelness must be maintained to an accuracy of the order of 1nm.

In practice such a high stability is very difficult to achieve. Even using low expansion materials for the construction, purely passive stability would require maintaining a temperature stability of better than 0.1°C and even then mechanical relaxation tends to limit the performance.

Although active feedback stabilisation is often used in practice, as for example in US 3 729 261-A. this can only be used in a scanning mode and normally requires a reference beam. The feedback system works by modulating the mirror spacing and alignment in order to maximise the height of the transmitted reference beam. Such systems are complex and cannot be used to stabilise a non-scanning interferometer.

A scheme using white light fringes has been used for maintaining parallelism even in a non-scanning interferometer but the scheme cannot be used for maintaining mirror spacing.

In US-A-4850709 a Fabry-Perot interferometer is disclosed with two interference plates, a control device for changing the spacing between the interference plates, a first optical device for directing a light beam through one of the interference plates at a first refraction angle and a second optical device for directing the light beam transmitted through the interference plate at a second refraction angle to the second interference plate. For control and maintenance of the spacing between the interference plates an additional light source is used whose light beam is directed as a reference beam at a predetermined refraction angle through the interference plates and a detection system is used for detecting the intensity of the reference beam and thus for detecting the reference spacing corresponding to the predetermined refraction angle.

From US-A-4444501 a stabilizer for the mirror separation of a Fabry-Perot interferometer is known, that generates at least three reference beams, which are directed through the interferometer and disposed substantially around the interferometer signal beam. The resulting intensity from the interference within each transmitted reference beam is detected and compared to a fixed reference. Based upon the ratio of reference intensity to fixed reference, the mirror position is controlled to maintain a constant spacing with respect to the wavelength of the reference source.

The object of the present invention is to provide a scanning Fabry-Perot interferometer and a method for stabilising it allowing in a simple manner a complete long-term stability of the interferometer to be achieved.

According to the invention, the underlying problem is solved with an interferometer arrangement according to claim 1 and with a method according to claim 12. Preferred embodiments of the interferometer arrangement and the method are characterized by the dependent claims.

Accordingly, the invention provides a Fabry-Perot interferometer comprising two plane mirrors arranged parallel to one another with an optical distance between the optical surfaces of the mirrors, the interferometer radiating an output light signal in response to a light input signal applied parallel to the optical axis of the interferometer, whereby means are provided for passing at least one reference light beam through the interferometer, the reference light beam being inclined at an angle (θ) to the optical axis of the interferometer. The angle (θ) between the reference light beam being and the optical axis is preferably larger than 0 degree, typically between 0 and 3 degrees.

Detection means are provided for detecting the output intensity of the or each reference light beam providing an electrical reference signal which corresponds to the intensity of the reference light beam transmitted through or reflected from the interferometer.

Preferably, a feedback loop and means for changing the optical distance between the optical surfaces of the mirrors are provided, the feedback loop receiving the electrical reference signal and being coupled to said means for changing the optical distance for optimising the intensity of the reference signal by changing and thus stabilising the optical distance to a value, for which the interferometer is in resonance for transmitting the reference light beam.

In a preferred embodiment, the Fabry-Perot interferometer comprises means for passing three reference light beams through the interferometer, the three reference light beams being parallel to each other and inclined at an angle (θ) to the optical axis of the interferometer. In this embodiment, the three reference light beams are passing preferably through the interferometer at a peripheral section of the mirrors. The three points of passage of the reference beams through the mirrors are preferably distributed regularly around the peripheral section of the mirrors. Detection means are provided in this embodiment for detecting the output intensity of each reference light beam providing a separate electrical reference signal for each reference light beam.

In another aspect of the invention, a Fabry-Perot interferometer is provided, comprising a feedback loop and means for changing the tilt of the mirrors optical surfaces are provided, the feedback loop receiving the three electrical reference signals corresponding to the intensity of the reference light beams and being coupled to said means for changing the tilt for optimising the intensity of the reference signals by changing the tilt of the mirrors optical surfaces to one another and thus stabilising the parallelness of the mirrors.

In a further embodiment of the invention, a Fabry-Perot interferometer is provided with means for passing at least one stabilisation light beam through the interferometer, whereby each stabilisation light beam corresponds to one of the reference light beams and is inclined at an angle (ψ) to the plane defined by the optical axis of the interferometer and the corresponding reference light beam. In this embodiment, detection means are provided for detecting the output intensities of the or each stabilisation light beam and the corresponding reference light beam, which provide an electrical stabilisation signal corresponding to the difference in the intensities of the stabilisation light beam and the corresponding reference light beam. Further in this embodiment, a feedback loop and means for changing the optical distance between the optical surfaces of the mirrors are provided, the feedback loop receiving the electrical stabilisation signal and being coupled to said means for changing the optical distance in order to stabilise the optical distance to a value, for which the stabilisation signal is zero, at which distance the transmitted intensities of the reference beam and the stabilisation beam are equal.

The invention also discloses a method for stabilising a Fabry-Perot interferometer, by transmitting at least one reference light beam through the interferometer, the reference light beam inclining an angle (θ) with the optical axis of the interferometer, the angle (θ) beeing preferably larger than zero. This method may be applied for stabilising the interferometer in a scanning or non-scanning mode. Scanning of the interferometer may be achieved by varying the angle (θ) between the or each reference light beam and the optical axis.

The present invention will be illustrated, merely by way of example, in the following description and with a reference to the accompanying drawings. The drawings show:
- Figure 1:: Schematical view of a Fabry-Perot interferometer (figure 1a) and the interferometer transmission curve as a function of mirror spacing (figure 1b);
- Figure 2:: A Fabry-Perot interferometer according to the present invention, showing three reference beams;
- Figure 3:: Schematical drawing of a feed back loop for controlling the means for changing the parallelness and the optical distance of the optical surfaces of the mirrors;
- Figure 4:: Schematical view of one mirror of the interferometer, transmitted by one reference beam and one stabilisation beam, according to a preferred embodiment of the invention;
- Figure 5:: Plots of the measured intensities of the reference beam and the stabilisation beam according to figure 4 after transmitting the interferometer, shown for different mirror spacings L;
- Figure 6:: Schematical view showing the optical means for deriving the reference beams and the stabilisation beams;
- Figure 7:: Schematical arrangement of the interferometer comprising mirrors for stirring the meassurement beam in and out of the interferometer;
- Figure 8:: Schematical arrangement of an alternative embodiment to the arrangement of figure 7;

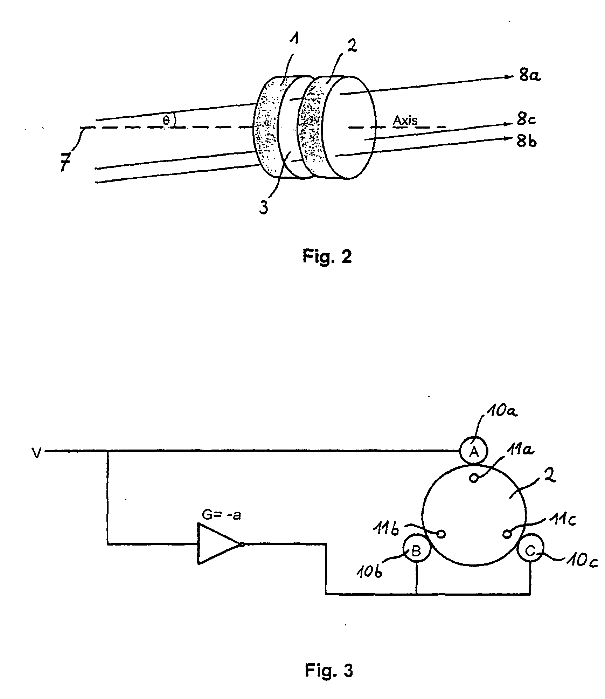

A preferred embodiment of the Fabry-Perot interferometer and a preferred method for stabilising it according to the invention uses three parallel reference light beams 8a, 8b, 8c. The beams are passed not perpendicularly, but at a small angle θ through the interferometer. Sensors measure the intensity of the beams and feedback loops optimise the intensity of each beam. This is indicated schematically in figure 2. The feedback loop is shown schematically in figure 3.

For the reference beams, the following equation holds:$\text{2nL} \text{·} \text{cos θ = p} \text{λ}$

The feedback loops maintain this condition, and so as θ is varied the mirror spacing L will be changed accordingly. Typical values for the angle θ lie between 0 and about 3degrees. As an example, if L is equal to 3mm and λ equal to 0.5µm, the spacing L will be changed by λ/2 as θ is varied from 0.01rdn to about 0.0163rdn (roughly 0.573° to 0.936°).

The sensitivity of the spacing L to changes in θ can be obtained by differentiating equation 3:$\frac{\text{δ} \text{L}}{\text{L}} \text{=} \frac{\text{-δ} \text{n}}{\text{n}} \text{+ δθ·} \text{tan} \text{θ +} \frac{\text{δλ}}{\text{λ}}$

If δL is equal to 1nm for a spacing L of 3mm and θ is 0.01rdn, then δθ is 3.3×10⁻⁵rdn. This calculation immediately shows the advantage of this scheme. A rotation of 3.3×10⁻⁵rdn is easy to produce accurately and reproducibly - it corresponds for example to a movement of about 10µm at the end of a lever 330mm long.

It should be noted that a rotation is basically temperature invariant - a uniform temperature change will alter the dimensions but not angles (provided of course that the materials used have the same coefficient of thermal expansion).

Equation 4 shows that the mirror spacing depends not only on cosθ but also on the laser wavelength λ and the refractive index n of the medium. Between the two mirrors 1, 2. The variation of n is unimportant as will be shown below. The wavelength of a reference single frequency laser can be better than 1 part in 10⁸. Applied to the above example this could lead to a variation in mirror spacing of just 3.10⁻²nm which is negligible.

Three piezoelectric translators 10a, 10b, 10c are used for changing the mirror spacing and adjusting the parallelness (in figure 1a only two of the three piezoelectric translators are shown). This is indicated in figure 2. In order to make the stabilisation of the three beams independent of one another it is convenient to drive the transducers with mixed signals. For example if translator A receives the signal V_{A} - a(V_{B} + V_{c}), and similar for the other axis, the small term "a" can be adjusted so that the signal V_{A} only affects the mirror spacing for beam A. Likewise for beams B and C (compare figure 3).

By adding a modulation signal to the signals V_{A,} etc. standard phase sensitive detection techniques can be used to optimise the intensity of each beam.

A modulation signal inevitably adds some noise to system. A technique described below enables stabilisation to be achieved without using a modulation signal.

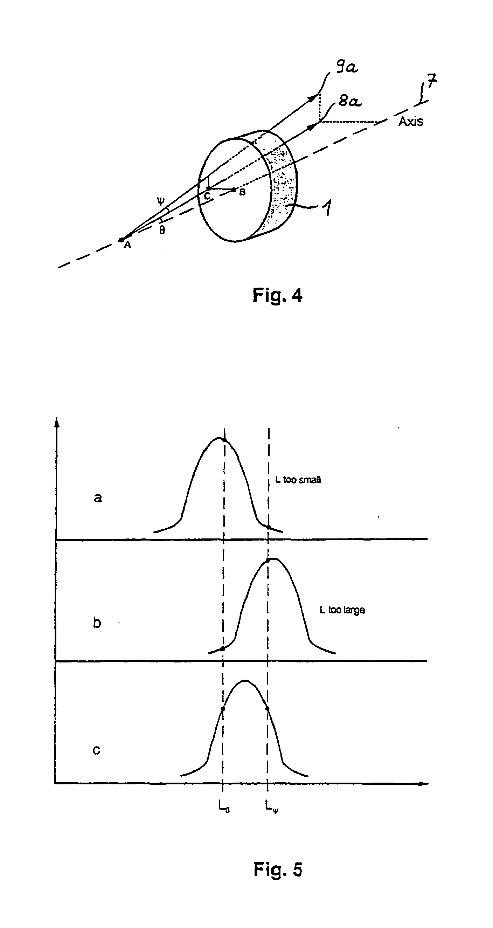

In figure 4 just one (8a) of the three reference beams has been shown for clarity. As in the scheme of figure 2 this reference beam 8a is rotated by external means through the angle θ in the plan ABC. As in the scheme of figure 2 this beam is rotated by external means through the angle θ in the plane ABC. Now however a second beam 9a has been formed which is at a small angle Ψ to this plane. The angle ψ is of the order of 0.5 to 1 degree.

For the first beam the equation 3 holds, namely${\text{2nL}}_{\text{0}} \text{·} \text{cos} \text{θ =} \text{p} \text{λ}$ while for the second beam${\text{2nL}}_{\text{ψ}} \text{·} \text{cos} \text{θ ·} \text{cos} \text{ψ =} \text{p} \text{λ}$

Since cosθ is very close to unity, these equations show that L₀ - _{ψ} is essentially independent of the scan angle θ. If the mirror spacing L is set midway between L₀ and L_{ψ} the intensities of both beams will be the same.

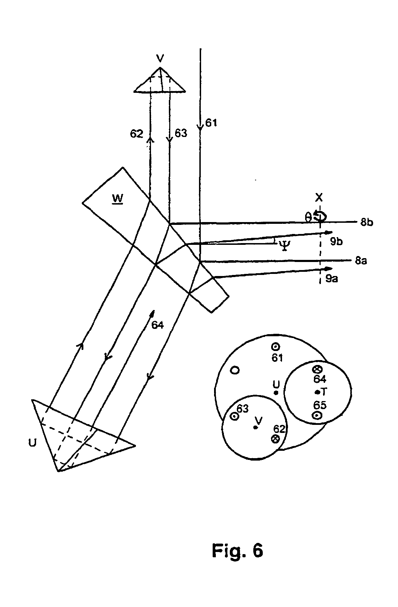

By measuring the difference in the intensities it is now possible to determine the sign of the error ΔL in L. Referring to figure 5 it is seen that if the error in L is negative (L too small) then the intensity I₀ is greater than I_{ψ}, while for positive ΔL the opposite is true.

If the difference in the intensities is amplified and used to drive the translator, both signals will be optimised until the intensity difference is zero corresponding to the situation c in figure 5.

This stabilisation method can of course be applied to all axis simultaneously. No modulation signal is required resulting in less noise and better stability.

The interferometer as described above requires 3 reference beams 8a, 8b, 8c and 3 stabilisation beams 9a, 9b 9c. The reference beams must be accurately parallel to each other, as must the stabilisation beams. The angle Ψ between reference and stabilisation beams must remain constant as the angle θ is varied. Figure 6 shows a simple scheme by which the beams can be derived.

Three comer cubes U, V, T and a small angle wedge W are employed. For purposes of clarity, only the comer cubes U and V and the wedge W are shown in figure 6. The relative positions of the 3 comer cubes U, V, T are shown in the insert of figure 6. The incident laser beam 61 strikes the wedge W at an angle and is refracted through the wedge W and reflected from both of its surfaces. The reference beam 8a is formed by reflection from the front side of the uncoated wedge W, the stabilisation beam 9a by reflection from the rear surface. After transmission through the wedge W the beam 61 is reflected successively by comer cubes U and V leading to the beams 62 and 63. The beam 63 then forms the second pair of reference and stabilisation beams 8b, 9b. The beam 63 transmitted through wedge W after reflection from comer cubes U and T becomes beams 64 and finally 65 which forms a third pair of reference and stabilisation beams 8c, 9c. (This third pair of reference/stabilisation beams, the beam 65 and comer cube T are not shown in figure 6 for clarity; also only the reflected beams of interest have been indicated - there will be many additional reflected beams, all of which can be removed with suitable masks).

The 3 pairs of reference/stabilisation beams 8a,9a; 8b,9b; 8c,9c then fall on a mirror (not shown in figure 6) which can be rotated about the axis X, thus allowing the angle θ to be varied while maintaining a constant angle ψ.

The interferometer is scanned by varying the angle θ. Standard mechanical and optical techniques can be use to vary this angle. The means by which this is achieved is well-known in the prior art. It is also clear that the mirror spacing L does not vary linearly with angle θ, but rather via the cosine function. By varying θ under for example stepper motor control it is straightforward to use computer control to linearise the scan.

The discussion so far has described how to stabilise and scan the interferometer using an angularly displaced reference beam 8a, 8b or 8c. In practice the interferometer will be used to scan and analyse some light source in the form of an input light signal 5 applied to the interferometer exactly parallel to its optical axis 7. It is important that the reference beam 8a, 8b, 8c does not affect the measurement. Two methods of achieving this aim are described below:

### Method 1:

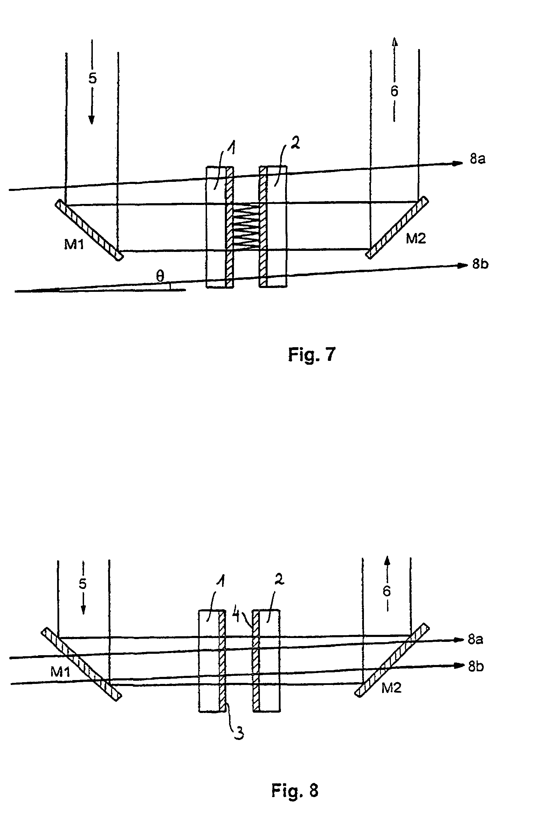

The three reference beams 8a, 8b, 8c occupy a relatively small part around the edge of the interferometer mirrors 1,2. The remaining area of the mirror surfaces 3, 4 can be used for measurements. Figure 7 shows how this might be realised. Two mirrors M1 and M2 (smaller than the interferometer mirrors 1, 2) are used to steer the measurement beam (which is the light input signal 5) in and out of the interferometer. The reference beams 8a, 8b, 8c pass outside M1 and M2. It is assumed here, although it is not a condition, that the measurement and reference beams have similar wavelengths.

### Method 2:

An alternative scheme where the measurement beam 5 and reference beams 8a, 8b, 8c have widely differing wavelengths uses dichroic mirrors as shown in figure 8. Dichroic mirrors M1 and M2 transmit reference wavelength and reflect measurement wavelength. The mirror arrangement is essentially the same as in figure 7, except that now the whole of the interferometer mirror area is available for measurement. The interferometer mirrors in this case must be coated for high reflectivity at both reference and measurement wavelengths.

When using the interferometer for a measurement a wavelength λ₁ will be measured in order q, following equation 1, where$\text{2nL} \text{=} \text{q} {\text{λ}}_{\text{1}}$

Comparing this with equation 3 shows that${\text{λ}}_{\text{1}} \text{=} \frac{\text{λp}}{\text{q} \text{·} \text{cos} \text{θ}}$

In other words the measured wavelength does not depend on the refractive index (except through dispersion in n if λ₁ and λ are widely differing).

## Claims

1. An interferometer arrangement comprising
- a scanning Fabry-Perot interferometer with two plane mirrors (1, 2) arranged parallel to one another with an optical distance (nL) between the optical surfaces (3, 4) of the mirrors (1, 2), the interferometer radiating an output light signal (6) in response to a light input signal (5) applied parallel to the optical axis (7) of the interferometer,
- means for passing at least one reference light beam (8a, 8b or 8c) through the interferometer, the or each reference light beam being inclined at an angle (θ) to the optical axis (7) of the interferometer,
- detection means for detecting the output intensity of the or each reference light beam (8a, 8b, 8c) providing an electrical reference signal which corresponds to the intensity of the reference light beam transmitted through or reflected from the interferometer,
- means (10a 10b, 10c) for changing the optical distance between the optical surfaces (3, 4) of the mirrors (1, 2),
- a feedback loop receiving the electrical reference signal,
**characterized in that** the arrangement further comprises means for varying the angle (θ) between the or each reference light beam (8a, 8b, 8c) and the optical axis (7) and that the feedback loop is coupled to said means for changing the optical distance for optimising the intensity of the reference signal by changing and thus stabilising the optical distance to a value, for which the interferometer is in resonance for transmitting the reference light beam, so that the interferometer can be scanned by varying the angle (θ).

2. An interferometer arrangement according to claim 1, **characterized in that** means are provided for passing three reference light beams (8a, 8b, 8c) through the interferometer, the three reference light beams being parallel to each other and inclined at an angle (8) to the optical axis (7) of the interferometer.

3. An interferometer arrangement according to claim 2, **characterized in that** the three reference light beams (8a, 8b, 8c) are passing through the interferometer at a peripheral section of the mirrors.

4. An interferometer arrangement according to claim 3, **characterized in that** the three points of passage (11a, 11b, 11c) of the reference beams (8a, 8b, 8c) through the mirrors (1, 2) are distributed regularly around the peripheral section of the mirrors.

5. An interferometer arrangement according to one of the claims 2 to 4, **characterized in that** detection means are provided for detecting the output intensity of each reference light beam providing a separate electrical reference signal for each reference light beam.

6. An interferometer arrangement according to claim 1, **characterized in that** a feedback loop and means (10a, 10b, 10c) for changing the tilt of the mirrors optical surfaces are provided, the feedback loop receiving the electrical reference signals corresponding to the intensity of the reference light beams (8a, 8b, 8c) and being coupled to said means for changing the tilt for optimising the intensity of the reference signals by changing the tilt of the mirrors optical surfaces to one another and thus stabilising the parallelness of the mirrors.

7. An interferometer arrangement according to claim 1, **characterized in that** means are provided for passing at least one stabilisation light beam (9a) through the interferometer, whereby each stabilisation light beam (9a) corresponds to one of the reference light beams (8a) and is inclined at a constant angle (ψ) to the plane defined by the optical axis (7) of the interferometer and the corresponding reference light beam (8a).

8. An interferometer arrangement according to claim 7, **characterized in that** detection means are provided for detecting the output intensities of the or each stabilisation light beam (9a) and the corresponding reference light beam (8a) and providing an electrical stabilisation signal corresponding to the difference in the intensities of the stabilisation light beam and the corresponding reference light beam.

9. An interferometer arrangement according to claim 8, **characterized in that** a feedback loop and means (10a, 10b, 10c) for changing the optical distance between the optical surfaces of the mirrors are provided, the feedback loop receiving the electrical stabilisation signal and being coupled to said means for changing the optical distance in order to stabilise the optical distance to a value, for which the stabilisation signal is zero, at which distance the transmitted intensities of the reference beam and the stabilisation beam are equal.

10. An interferometer arrangement according to any one of the preceeding claims, **characterized in that** the or each reference light beam (8a, 8b, 8c) passes through the interferometer in a section of the mirrors, which is not occupied by the input light beam.

11. An interferometer arrangement according to any one of the preceeding claims, **characterized in that** mirrors (M1, M2) are provided for steering the input light beam (5) in and out of the interferometer, whereby the mirrors (M1, M2) transmit the wavelength of the reference light beam and reflect the wavelength of the input light beam.

12. Method for stabilising and scanning a Fabry-Perot interferometer, the interferometer comprising two plane mirrors (1, 2) arranged parallel to one another with an optical distance (nL) between the optical surfaces (3, 4) of the mirrors and the interferometer radiating an output light signal (6) in response to a light input signal (5) applied parallel to the optical axis (7) of the interferometer, whereby at least one reference light beam (8a, 8b or 8c) is transmitted through the interferometer, the or each reference light beam being inclined at an angle (θ) with the optical axis (7) of the interferometer, **characterized in that** scanning of the interferometer is achieved by
- varying the angle (θ),
- measuring the output intensity of the or each reference light beam (8a, 8b or 8c) transmitted through or reflected from the interferometer and providing a reference signal for each reference light beam,
- optimising the output intensity of the or each reference signal by changing the optical distance (nL) of the mirrors (1, 2) to a value, for which the interferometer is in resonance for transmitting the reference light beam(s).

13. Method according to claim 12, **characterized in that** a number of reference light beams (8a, 8b, 8c) is transmitted through the interferometer, the different reference light beams being parallel to each other and inclined at an angle (θ) to the optical axis (7) of the interferometer and passing through the mirrors (1, 2) at different points (11a, 11b, 11c) distributed regularly over the surface of the mirrors.

14. Method according to one of the claims 12 or 13, **characterized in that** at least one stabilisation light beam (9a) is directed through the interferometer, whereby each stabilisation light beam (9a) corresponds to one of the reference light beams (8a) and is inclined at a constant angle (ψ) to the plane defined by the optical axis (7) of the interferometer and the corresponding reference light beam (8a).

15. Method according to claim 14, **characterized in that** the output intensities of the or each stabilisation light beam (9a) and the corresponding reference light beam (8a) is detected and an electrical stabilisation signal corresponding to the difference in the intensities of the stabilisation light beam and the corresponding reference light beam is provided.

16. Method according to claim 15, **characterized in that** the optical distance between the optical surfaces of the mirrors is changed in order to stabilise the optical distance to a value, for which the stabilisation signal is zero, at which distance the transmitted intensities of the reference beam and the corresponding stabilisation beam are equal.

17. Method according to one of the claims 12 to 16, **characterized in that** the angle (θ) is varied between 0 and 3 degrees.

## Patentansprüche

1. Interferometeranordnung umfassend
- ein durchstimmbares Fabry-Perot-Interferometer mit zwei ebenen Spiegeln (1, 2), die parallel zueinander und in einem optischen Abstand (nL) zwischen ihren optischen Flächen (3, 4) angeordnet sind, wobei das Interferometer ein optisches Ausgangssignal (6) ausgibt als Reaktion auf ein optisches Eingangssignal (5), welches parallel zur optischen Achse (7) des Interferometers eingegeben wird,
- Mittel zum Durchtritt mindestens eines Referenzlichtstrahls (8a, 8b oder 8c) durch das Interferometer, wobei der oder jeder Referenzlichtstrahl einen Winkel (θ) mit der optischen Achse (7) des Interferometers einschliesst,
- Detektionsmittel zur Detektion der Ausgangsintensität des oder jedes Referenzlichtstrahls (8a, 8b oder 8c), welche ein elektrisches Referenzsignal ausgeben, das der Intensität des vom Interferometer transmittierten oder reflektierten Referenzlichtstrahl entspricht,
- Mittel (10a, 10b, 10c) zur Änderung des optischen Abstands zwischen den optischen Flächen (3, 4) der Spiegel (1,2),
- eine Rückkopplungsschleife, welche das elektrische Referenzsignal erhält,
**dadurch gekennzeichnet, dass** die Anordnung weiterhin Mittel zur Änderung des Winkels (θ) zwischen dem oder jedem Referenzlichtstrahl (8a, 8b oder 8c) und der optischen Achse (7) umfasst und dass die Rückkopplungsschleife mit den Mitteln zur Änderung des optischen Abstands gekoppelt ist um die Intensität des Referenzsignals zu optimieren durch Änderung und somit Stabilisierung des optischen Abstands auf einen Wert, bei dem das Interferometer in Resonanz für die Transmission des Referenzlichtstrahls steht, so dass das Interferometer durch Änderung des Winkels durchgestimmt werden kann.

2. Interferomteranordnung nach Anspruch 1, **dadurch gekennzeichnet, dass** Mittel bereitgestellt sind zum Durchtritt von drei Referenzlichtstrahlen (8a, 8b, 8c) durch das Interferometer, wobei die drei Referenzlichtstrahlen parallel zueinander und einen Winkel (θ) mit der optischen Achse (7) des Interferometers einschließend angeordnet sind.

3. Interferometeranordnung nach Anspruch 2, **dadurch gekennzeichnet, dass** die drei Referenzlichtstrahlen (8a, 8b, 8c) in einem äußeren Bereich der Spiegel durch das Interferometer durchtreten.

4. Interferometeranordnung nach Anspruch 3, **dadurch gekennzeichnet, dass** die drei Durchtrittspunkte (11a, 11b, 11c) der Referenzstrahlen (8a, 8b, 8c) regelmäßig in dem äußeren Bereich der Spiegel verteilt sind.

5. Interferometeranordnung nach einem der Ansprüche 2 bis 4, **dadurch gekennzeichnet, dass** Detektionsmittel zur Detektion der Ausgangsintensität jedes Referenzlichtstrahls vorgesehen sind, welche ein separates elektrisches Referenzsignal für jeden Referenzlichtstrahl bereitstellen.

6. Interferometeranordnung nach Anspruch 1, **dadurch gekennzeichnet, dass** eine Rückkopplungsschleife und Mittel (10a, 10b, 10c) zur Änderung der Neigung der optischen Flächen der Spiegel vorgesehen sind, wobei die Rückkopplungsschleife die elektrischen Referenzsignale erhält, welche den Intensitäten der Referenzlichtstrahlen (8a, 8b, 8c) entsprechen und mit den Mitteln zur Änderung der Neigung gekoppelt sind, um die Intensität der Referenzsignale zu optimieren durch Änderung der Neigung der optischen Flächen der Spiegel zueinander und somit zur Stabilisierung der Parallelität der Spiegel.

7. Interferometeranordnung nach Anspruch 1, **dadurch gekennzeichnet, dass** Mittel zum Durchtritt mindestens eines Stabilisationslichtstrahls (9a) durch das Interferometer vorgesehen sind, wobei jeder Stabilisationslichtstrahl (9a) einem der Referenzlichtstrahlen (8a) zugeordnet ist und einen konstanten Winkel (ψ) mit der Ebene einschließt, welche durch die optische Achse (7) des Interferometers und dem zugeordneten Referenzlichtstrahl (8a) aufgespannt ist.

8. Interferometeranordnung nach Anspruch 7, **dadurch gekennzeichnet, dass** Detektionsmittel zur Detektion der Ausgangsintensität des oder jedes Stabilisationslichtstrahls (9a) und des zugeordneten Referenzlichtstrahls (8a) und zum Bereitstellen eines elektrischen Stabilisationssignals, welches der Differenz in den Intensitäten des Stabilisationslichtstrahls und des ihm zugeordneten Referenzlichtstrahls entspricht, vorgesehen sind.

9. Interferometeranordnung nach Anspruch 8, **dadurch gekennzeichnet, dass** eine Rückkopplungsschleife und Mittel (10a, 10b, 10c) zur Änderung des optischen Abstands zwischen den optischen Flächen der Spiegel vorgesehen sind, wobei die Rückkopplungsschleife das elektrische Stabilisationssignal erhält und mit den Mitteln zur Änderung des optischen Abstands gekoppelt ist, um den optischen Abstand auf einen Wert zu stabilisieren, bei dem das Stabilisationssignal Null ist, wobei bei diesem optischen Abstand die Intensität der transmittierten Referenzstrahlen und Stabilisationsstrahlen gleich ist.

10. Interferometeranordnung nach einem der voranstehenden Ansprüche, **dadurch gekennzeichnet, dass** der oder jeder Referenzlichtstrahl (8a, 8b, 8c) durch das Interferometer in einem Bereich der Spiegel transmittiert, der nicht von dem Eingangslichtstrahl besetzt ist.

11. Interferomateranordnung nach einem der voranstehenden Ansprüche, **dadurch gekennzeichnet, dass** Spiegel (M1, M2) vorgesehen sind um den Eingangslichtstrahl (5) in und wieder aus dem Interferometer zu lenken, wobei die Spiegel (M1, M2) die Wellenlänge des Referenzlichtstrahl transmittieren und die Wellenlänge des Eingangslichtstrahls reflektieren.

12. Verfahren zum Stabilisieren und Durchstimmen eines Fabry-Perot-Interferometers, welches zwei ebene Spiegel (1, 2) umfasst, die parallel zueinander und in einem optischen Abstand (nL) zwischen ihren optischen Flächen (3, 4) angeordnet sind und welches ein optisches Ausgangssignal (6) ausgibt als Reaktion auf ein optisches Eingangssignal (5), welches parallel zur optischen Achse (7) des Interferometers eingegeben wird, wobei mindestens ein Referenzlichtstrahl (8a, 8b oder 8c) durch das Interferometer transmittiert wird und der oder jeder Referenzlichtstrahl einen Winkel (θ) mit der optischen Achse (7) des Interferometers einschließt, **dadurch gekennzeichnet, dass** das Interferometer durchgestimmt wird indem
- der Winkel (θ) geändert wird,
- die Ausgangsintensität des oder jedes Referenzlichtstrahls (8a, 8b oder 8c), der durch das Interferometer transmittiert oder von diesem reflektiert wird, gemessen und ein Referenzsignal für jeden Referenzlichtstrahl bereitgestellt wird,
- die Ausgangsintensität des oder jedes Referenzsignals optimiert wird durch Änderung des optischen Abstands (nL) der Spiegel (1, 2) auf einen Wert, bei dem das Interferometer in Resonanz für die Transmission des oder jedes Referenzlichtstrahls steht.

13. Verfahren nach Anspruch 12, **dadurch gekennzeichnet, dass** eine Anzahl von Referenzlichtstrahlen (8a, 8b, 8c) durch das Interferometer transmittiert wird, wobei die einzelnen Referenzlichtstrahlen parallel zueinander und in einem Winkel (θ) zur optischen Achse (7) des Interferometers angeordnet sind und durch die Spiegel (1, 2) an verschiedenen Stellen (11a, 11b, 11c), welche regelmäßig über die Fläche der Spiegel verteilt sind, durchtreten.

14. Verfahren nach einem der Ansprüche 12 oder 13, **dadurch gekennzeichnet, dass** mindestens ein Stabilisationslichtstrahl (9a) durch das Interferometer gelenkt wird, wobei jeder Stabilisationslichtstrahl (9a) einem der Referenzlichtstrahlen (8a) zugeordnet ist und einen konstanten Winkel (ψ) mit der Ebene einschließt, welche durch die optische Achse (7) des Interferometers und des zugeordneten Referenzlichtstrahls (8a) aufgespannt ist.

15. Verfahren nach Anspruch 14, **dadurch gekennzeichnet, dass** die Ausgangsintensität des oder jedes Stabilisationslichtstrahls (9a) und des zugehörigen Referenzlichtstrahls (8a) detektiert und ein elektrisches Stabilisationssignal, welches der Differenz in den Intensitäten des Stabilisationslichtstrahls und des zugeordneten Referenzlichtstrahls entspricht, bereit gestellt wird.

16. Verfahren nach Anspruch 15, **dadurch gekennzeichnet, dass** der optische Abstand zwischen den optischen Flächen der Spiegel geändert wird um den optischen Abstand auf einen Wert zu stabilisieren, bei dem das Stabilisationssignal Null ist, wobei bei diesem optischen Abstand die transmittierten Intensitäten des Referenzstrahls und des zugeordneten Stabilisationsstrahls gleich sind.

17. Verfahren nach einem der Ansprüche 12 bis 16, **dadurch gekennzeichnet, dass** der Winkel (θ) zwischen 0 und 3 Grad geändert wird.

## Revendications

1. Dispositif d'interféromètre comprenant :
- un interféromètre Fabry-Pérot à balayage ayant deux miroirs plans (1, 2) agencés parallèlement l'un à l'autre avec une distance optique (nL) entre les surfaces optiques (3, 4) des miroirs (12), l'interféromètre rayonnant un signal lumineux (6) de sortie en réponse à un signal lumineux (5) d'entrée appliqué parallèlement à l'axe optique (7) de l'interféromètre,
- des moyens pour transmettre au moins un faisceau lumineux (8a, 8b ou 8c) de référence à travers l'interféromètre, le ou chaque faisceau lumineux de référence étant incliné d'un angle (θ) par rapport à l'axe optique (7) de l'interféromètre,
- des moyens de détection pour détecter l'intensité de sortie du ou de chaque faisceau lumineux (8a, 8b ou 8c) de référence et fournir un signal électrique de référence qui correspond à l'intensité du faisceau lumineux de référence transmis ou réfléchi par l'interféromètre,
- des moyens (10a, 10b, 10c) pour faire varier la distance optique entre les surfaces optiques (3, 4) des miroirs (1, 2),
- une boucle de rétroaction recevant le signal électrique de référence,
**caractérisé en ce que** le dispositif comprend en outre des moyens pour faire varier l'angle (θ) entre le ou chaque faisceau lumineux (8a, 8b ou 8c) de référence et l'axe optique (7) et que la boucle de rétroaction est couplée auxdits moyens pour faire varier la distance optique afin d'optimiser l'intensité du signal de référence en modifiant et stabilisant ainsi la distance optique à une valeur pour laquelle l'interféromètre est en résonance pour transmettre le faisceau lumineux de référence, de sorte que l'interféromètre puisse être balayé en faisant varier l'angle (θ).

2. Dispositif d'interféromètre selon la revendication 1, **caractérisé en ce que** des moyens sont prévus pour transmettre trois faisceaux lumineux (8a, 8b, 8c) de référence à travers l'interféromètre, les trois faisceaux lumineux de référence étant parallèles les uns aux autres et inclinés d'un angle (θ) par rapport à l'axe optique (7) de l'interféromètre.

3. Dispositif d'interféromètre selon la revendication 2, **caractérisé en ce que** les trois faisceaux lumineux (8a, 8b, 8c) de référence passent à travers l'interféromètre à une portion périphérique des miroirs.

4. Dispositif d'interféromètre selon la revendication 3, **caractérisé en ce que** les trois points (11a, 11b, 11c) de passage des faisceaux (8a, 8b, 8c) de référence à travers les miroirs (1, 2) sont répartis régulièrement autour de la portion périphérique des miroirs.

5. Dispositif d'interféromètre selon l'une des revendications 2 à 4, **caractérisé en ce que** des moyens de détection sont prévus pour détecter l'intensité de sortie de chaque faisceau lumineux de référence et fournir un signal électrique séparé de référence pour chaque faisceau lumineux de référence.

6. Dispositif d'interféromètre selon la revendication 1, **caractérisé en ce qu'**une boucle de rétroaction et des moyens (10a, 10b, 10c) pour modifier l'inclinaison des surfaces optiques des miroirs sont prévus, la boucle de rétroaction recevant les signaux électriques de référence correspondant à l'intensité des faisceaux lumineux (8a, 8b, 8c) de référence et étant couplée auxdits moyens pour modifier l'inclinaison afin d'optimiser l'intensité des signaux de référence en modifiant l'inclinaison des surfaces optiques des miroirs les unes par rapport aux autres et stabilisant ainsi le parallélisme des miroirs.

7. Dispositif d'interféromètre selon la revendication 1, **caractérisé en ce que** des moyens sont prévus pour faire passer au moins un faisceau lumineux (9a) de stabilisation à travers l'interféromètre, dans lequel chaque faisceau lumineux (9a) de stabilisation correspond à un des faisceaux lumineux (8a) de référence et est incliné d'un angle constant (ψ) par rapport au plan défini par l'axe optique (7) de l'interféromètre et le faisceaux lumineux (8a) de référence correspondant.

8. Dispositif d'interféromètre selon la revendication 7, **caractérisé en ce que** des moyens de détection sont prévus pour détecter les intensités de sortie du ou de chaque faisceau lumineux (9a) de stabilisation et du faisceau lumineux (8a) de référence correspondant, et fournir un signal électrique de stabilisation correspondant à la différence entre les intensités du faisceau lumineux de stabilisation et du faisceau lumineux de référence correspondant.

9. Dispositif d'interféromètre selon la revendication 8, **caractérisé en ce qu'**une boucle de rétroaction et des moyens (10a, 10b, 10c) pour modifier la distance optique entre les surfaces optiques des miroirs sont prévus, la boucle de rétroaction recevant le signal électrique de stabilisation et étant couplée auxdits moyens pour modifier la distance optique afin de stabiliser la distance optique à une valeur pour laquelle le signal de stabilisation est nul, distance à laquelle les intensités transmises du faisceau de référence et du faisceau de stabilisation sont égales.

10. Dispositif d'interféromètre selon l'une quelconque des revendications précédentes, **caractérisé en ce que** le ou chaque faisceau lumineux (8a, 8b, 8c) de référence passe à travers l'interféromètre par une portion des miroirs qui n'est pas occupée par le faisceau lumineux d'entrée.

11. Dispositif d'interféromètre selon l'une quelconque des revendications précédentes, **caractérisé en ce que** des miroirs (M1, M2) sont prévus pour diriger le faisceau (5) de mesure en direction et en provenance de l'interféromètre, de sorte que les miroirs (M1, M2) transmettent la longueur d'onde du faisceau lumineux de référence et réfléchissent la longueur d'onde du faisceau lumineux d'entrée.

12. Procédé pour stabiliser et balayer un interféromètre Fabry-Pérot, l'interféromètre comprenant deux miroirs plans (M1, M2) agencés parallèlement l'un à l'autre à une distance optique (nL) entre les surfaces optiques (3, 4) des miroirs et l'interféromètre rayonnant un signal lumineux (6) de sortie en réponse à un signal lumineux (5) d'entrée appliqué parallèlement à l'axe optique (7) de l'interféromètre, dans lequel au moins un faisceau lumineux (8a, 8b ou 8c) de référence est transmis à travers l'interféromètre, le ou chaque faisceau lumineux de référence étant incliné d'un angle (θ) par rapport à l'axe optique (7) de l'interféromètre, **caractérisé en ce que** le balayage de l'interféromètre est réalisé en
- faisant varier l'angle (θ),
- mesurant l'intensité de sortie du ou de chaque faisceau lumineux (8a, 8b ou 8c) de référence transmis ou réfléchi par l'interféromètre et fournissant un signal de référence pour chaque faisceau lumineux de référence,
- optimisant l'intensité de sortie du ou de chaque signal de référence en modifiant la distance optique (nL) des miroirs (1, 2) pour une valeur pour laquelle l'interféromètre est en résonance pour transmettre le ou les faisceaux lumineux de référence.

13. Procédé selon la revendication 12, **caractérisé en ce qu'**un certain nombre de faisceaux lumineux (8a, 8b, 8c) de référence sont transmis à travers l'interféromètre, les différents faisceaux lumineux de référence étant parallèles les uns aux autres et inclinés d'un angle (θ) par rapport à l'axe optique (7) de l'interféromètre et passant à travers les miroirs (1, 2) en des points différents (11a, 11b, 11c) répartis régulièrement sur la surface des miroirs.

14. Procédé selon la revendication 12 ou 13, **caractérisé en ce qu'**au moins un faisceau lumineux (9a) de stabilisation est dirigé à travers l'interféromètre, de sorte que chaque faisceau lumineux (9a) de stabilisation correspond à un des faisceaux lumineux (8a) de référence et est incliné d'un angle constant (ψ) par rapport au plan défini par l'axe optique (7) de l'interféromètre et le faisceau lumineux (8a) de référence correspondant.

15. Procédé selon la revendication 14, **caractérisé en ce que** les intensités du ou de chaque faisceau lumineux (9a) de stabilisation et du faisceau lumineux (8a) de référence correspondant sont détectées, et qu'un signal électrique de stabilisation correspondant à la différence entre les intensités du faisceau lumineux de stabilisation et du faisceau lumineux de référence correspondant est prévu.

16. Procédé selon la revendication 15, **caractérisé en ce que** la distance optique entre les surfaces optiques des miroirs est modifiée pour stabiliser la distance optique à une valeur pour laquelle le signal de stabilisation est nul, distance à laquelle les intensités transmises du faisceau de référence et du faisceau de stabilisation correspondant sont égales.

17. Procédé selon l'une des revendications 12 à 16, **caractérisée en ce que** l'angle (θ) varie entre 0 et 3 degrés.
